# EUROPÄISCHE PATENTSCHRIFT

(11) **EP 3 902 712 B1**
(45) Veröffentlichungstag und Bekanntmachung des Hinweises auf die Patenterteilung: **08.02.2023**
(21) Anmeldenummer: 19828764.1
(22) Anmeldetag: 20.12.2019
(51) Int. Cl.: B60S 1/40, B60S 1/38, B60S 1/52

(54) **WISCHARM MIT VERBINDUNGSADAPTER**
WIPER ARM HAVING A CONNECTION ADAPTER
BRAS D'ESSUIE-GLACE POURVU D'UN ADAPTATEUR DE LIAISON

(30) Priorität: 28.12.2018 DE 102018251764
(43) Veröffentlichungstag der Anmeldung: 03.11.2021
(73) Patentinhaber: Robert Bosch GmbH, 70442 Stuttgart (DE)
(72) Erfinder: RAPP, Harald, 77815 Buehl (DE); HORVATH, Zsofia, 8175 Balatonfuezfo (HU)
(86) Internationale Anmeldenummer: PCT/EP2019/086714
(87) Internationale Veröffentlichungsnummer: WO 2020/136123

(56) Entgegenhaltungen:
- DE-A1-102005 060 617
- DE-A1-102012 210 167
- FR-A1- 3 004 685
- US-A1- 2017 297 534

## Beschreibung

### Stand der Technik

Die Erfindung betrifft einen Wischarm mit Verbindungsadapter nach der Gattung des unabhängigen Anspruchs. Die US 2017/297534 A1 offenbart den Oberbegriff dieses Anspruchs.

Im Stand der Technik sind Wischarme, Verbindungsadapter und Wischblätter zur Reinigung von Fahrzeugscheiben bekannt, bei denen das Wischblatt an dem Wischarm mithilfe des Verbindungsadapters montiert werden kann, wobei zugleich Anschlüsse für eine Reinigungsflüssigkeit verbunden werden können. Dies ist bekannt für Anschlüsse bei von oben aufgesetzten und verriegelten Verbindungsadaptern mit in Längsrichtung des Wischblatt orientierten Anschlüssen.

Aus der DE 10 2007 062 304 A1 ist ein Wischblatt zum Reinigen von Fahrzeugscheiben bekannt mit einem Adapter, der ein Gelenkt zwischen einem ersten Adapterteil und einem zweiten Adapterteil bildet, wobei Befestigungsmittel des Wischarms von oben auf den zweiten Adapterteil aufgesetzt werden und verriegelt werden können und in dem zweiten Adapterteil in Längsrichtung des Wischblatt orientiert Fluidanschlüsse für eine Reinigungsflüssigkeit angeordnet sind.

Beispielsweise aus der DE 10 162 399A1 ist ein Scheibenwischer mit einem Wischarm mit einer gelenkigen Verbindung nach dem "Side-Lock" System bekannt. An dem Wischarm ist an seinem freien Ende seitlich, quer zur Längsrichtung und zu einem Wischblatt zeigend ein Stift zum gelenkigen Verbinden des Wischblatts befestigt ist, der in einer Durchgangsöffnung des Wischblatts steckt und in einer montierten Stellung durch eine Brücke axial verriegelt ist, die parallel zum Stift am Wischarm angeordnet ist und mit einem abgewinkelten Ende das Wischblatt übergreift,

Die Eigenschaften einer solchen Side-Lock Verbindung werden in Bezug auf das Verhalten bei hohen Fahrgeschwindigkeiten als vorteilhaft angesehen. Ebenso wird das Verhalten in Bezug auf die Fähigkeit, Wasser von einer A-Säule seitlich zu einer Fahrzeugfrontscheibe zurückzustreifen als vorteilhaft angesehen

Aus der US 2017 297534A1 ist ein System zur Reinigung einer Glasoberfläche bekannt mit einem Wischblatt, das einen Verbindungsadapter aufweist, einen Wischarm mit zumindest einem Scharniermittel, das dem Verbindungsadapter eine relative Drehung gegenüber dem Wischarm ermöglicht und mit einem Verbindungsstück in Kontakt mit dem Verbindungsadapter und auf den Scharniermitteln angeordnet, das Mittel zum Versprühen einer Flüssigkeit auf die Glasoberfläche aufweist. Weiterhin ist aus dieser Druckschrift auch bekannt, dass die Scharniermittel als Side-Lock Verbindung ausgeführt sind, bei der ein Stift in einer Durchgangsöffnung sitzt und unter einem bestimmten Winkelbereich durch eine Brücke, die das Wischblatt bzw. einen Adapterteil umgreift, gegen ein Herausziehen blockiert wird.

### OFFENBARUNG DER ERFINDUNG

Der Wischarm mit Verbindungsadapter mit den Merkmalen des Hauptanspruchs hat den Vorteil, dass durch einen Fluidstecker auf der Oberseite des Verbindungsadapters mindestens ein Fluidanschluss mit dem Verbindungsadapter verbunden werden kann. Es ergibt sich eine einfache und zuverlässige Möglichkeit, auch bei einer Side-Lock Verbindung einen Fluidanschluss herzustellen, mit dem auch ein mit dem Verbindungsadapter verbundenes Wischblatt mit Reinigungsflüssigkeit versorgt werden kann. Es ergibt sich eine einfache Montagemöglichkeit, da nach dem Einsetzen des Stifts und Verdrehen des Wischarms, bis dieser beispielsweise durch eine Brücke mit Abwinkelung verriegelt wird, die Oberseite des Verbindungsadapters zumindest vor dem Bereich dieser Brücke gut zugänglich ist.

Durch die in den Unteransprüchen aufgeführten Maßnahmen ergeben sich weiterhin vorteilhafte Weiterbildungen und Verbesserungen der in dem Hauptanspruch angegebenen Merkmale.

Vorteilhaft führt der Fluidstecker parallel zum Stift des Wischarms orientiert Fluidleitungen an den Verbindungsadapter heran. Die Fluidleistungen oder Schläuche liegen somit vorteilhaft parallel der Drehachse und werden rechtwinklig an das Wischblatt bzw. den Verbindungsadapter herangeführt.

In einer vorteilhaften Ausgestaltung ist der Fluidstecker ein gegenüber dem Wischarm bewegliches Bauteil, das mit diesem über die Fluidleitungen verbunden ist. Der Fluidstecker kann dadurch nach der Montage des Wischblatt bzw. Verbindungsadapters an dem Wischarm leicht eingesteckt werden.

Vorteilhaft ist der Fluidstecker bündig in die Oberseite des Verbindungsadapters einsetzbar.

Der Verbindungsadapter kann eine Aufnahme für den Fluidstecker über der Öffnung für den Stift aufweisen.

In einer günstigen Ausgestaltung sind die Fluidanschlüsse in dem Verbindungsadapter seitlich zu der Öffnung für den Stift angeordnet.

Der Fluidstecker kann sich quer über die gesamte Breite des Verbindungsadapters erstrecken.

### Beschreibung der Zeichnungen

Ausführungsbeispiele der Erfindung sind in den Zeichnungen dargestellt und in der nachfolgenden Beschreibung näher erläutert. Es zeigen:
Fig. 1 ein Ausführungsbeispiel eines Wischarms mit Verbindungsadapter und
Fig. 2 einen Fluidstecker.

### Beschreibung der Ausführungsbeispiele

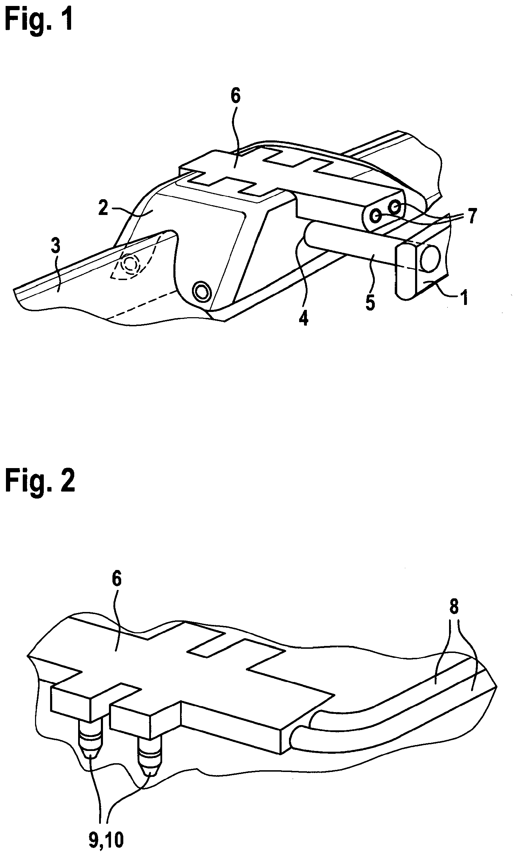

Die Fig. 1 zeigt ein Ausführungsbeispiel eines Wischarms 1 mit Verbindungsadapter 2. Der Verbindungsadapter 2 ist mit einem Wischblatt 3 verbunden, das in Form eines Flachbalkenwischblatts oder gelenklosen Wischblatts ausgeführt ist. In eine Öffnung 4 des Verbindungsadapters 2 kann ein Stift 5 des Wischarms 1 eingesetzt werden. Durch hier nicht näher dargestellte Verriegelungsmittel wird der Stift 5 in der Öffnung 4 gesichert. Dies kann beispielsweise eine Brücke mit einem abgewinkelten Bereich sein, die den Verbindungsadapter 2 übergreift und bei einer Winkelposition zwischen Wischarm 1 und Wischblatt 3 entsprechend dem normalen Betrieb ein Herausziehen des Stifts 5 verhindert.

Auf der Oberseite des Verbindungsadapters 2 ist ein Fluidstecker 6 mit zwei Zuflüssen 7 für Reinigungsflüssigkeit in eine entsprechende Ausnehmung des Verbindungsadapters 2 eingesteckt. Der Fluidstecker 6 befindet sich direkt über der Öffnung 4 für den Stift 5 und erstreckt sich über die gesamte Breite des Verbindungsadapters 2. Dadurch kann beispielsweise auch auf der Kopfseite der Fluidstecker 6 mit der Hand ergriffen werden, wenn dieser herausgezogen werden soll.

Die Fig. 2 zeigt den Fluidstecker 6 mit Schläuchen als Fluidzuleitung 8. Hohle Buchsen 9 dienen als Fluidanschlüsse 10 und befinden sich im eingestecktem Zustand neben der Öffnung 4 für den Stift 5 in dem Verbindungsadapter 2.

## Patentansprüche

1. Wischarm mit Verbindungsadapter, an dem ein Wischblatt (3), insbesondere ein Flachbalkenwischblatt oder gelenksloses Wischblatt gehalten werden kann und der zur seitlichen Aufnahme eines Stiftes (5) des Wischarms (3) eine Öffnung (4) aufweist, wobei bei eingesetztem Stift (5) der Verbindungsadapter (2) sich um den Stift (5) drehen kann, sowie Verriegelungsmitteln zur Sicherung des Stiftes (5) in der Öffnung (4), insbesondere eine Brücke, die parallel zum Stift (5) am Wischarm (3) angeordnet ist und mit einem abgewinkelten Ende den Verbindungsadapter (2) übergreift, wobei der Verbindungsadapter Fluidanschlüsse (10) für die Zuleitung einer Reinigungsflüssigkeit aufweist,
**dadurch gekennzeichnet,**
**dass** durch einen Fluidstecker (6) auf der Oberseite des Verbindungsadapters (2) mindestens ein Fluidanschluss (6) mit dem Verbindungsadapter (2) verbunden werden kann.

2. Wischarm mit Verbindungsadapter nach Anspruch 1,
**dadurch gekennzeichnet,**
**dass** der Fluidstecker (6) parallel zum Stift (5) des Wischarms (3) orientiert Fluidleitungen (8) an den Verbindungsadapter (2) heranführt.

3. Wischarm mit Verbindungsadapter nach Anspruch 2,
**dadurch gekennzeichnet,**
**dass** der Fluidstecker (6) ein gegenüber dem Wischarm (3) bewegliches Bauteil ist, das mit diesem über die Fluidleitungen (8) verbunden ist.

4. Wischarm mit Verbindungsadapter nach einem der vorhergehenden Ansprüche, **dadurch gekennzeichnet,**
**dass** der Fluidstecker (6) bündig in die Oberseite des Verbindungsadapters (2) einsetzbar ist.

5. Wischarm mit Verbindungsadapter nach einem der vorhergehenden Ansprüche, **dadurch gekennzeichnet,**
**dass** der Verbindungsadapter (2) eine Aufnahme für den Fluidstecker (6) über der Öffnung (4) für den Stift (5) aufweist.

6. Wischarm mit Verbindungsadapter nach Anspruch 5,
**dadurch gekennzeichnet,**
**dass** die Fluidanschlüsse (10) in dem Verbindungsadapter (2) seitlich zu der Öffnung (4) für den Stift (5) angeordnet sind.

7. Wischarm mit Verbindungsadapter nach einem der vorhergehenden Ansprüche, **dadurch gekennzeichnet,**
**dass** der Fluidstecker (6) sich quer über die gesamte Breite des Verbindungsadapters (2) erstreckt.

## Claims

1. Wiper arm having a connection adapter on which a wiper blade (3), in particular a flat-bar wiper blade or joint-free wiper blade can be held and which has an opening (4) for laterally receiving a pin (5) of the wiper arm (3), wherein, when the pin (5) is inserted, the connection adapter (2) can rotate about the pin (5), and locking means for securing the pin (5) in the opening (4), in particular a bridge which is arranged on the wiper arm (3) parallel to the pin (5) and by way of an angled end engages over the connection adapter (2), wherein the connection adapter has fluid connections (10) for the supply of a cleaning fluid, **characterized**
**in that** at least one fluid connection (6) can be connected to the connection adapter (2) by means of a fluid plug-type connector (6) on the top side of the connection adapter (2).

2. Wiper arm having a connection adapter according to Claim 1,
**characterized**
**in that** the fluid plug-type connector (6) oriented parallel to the pin (5) of the wiper arm (3) leads fluid lines (8) to the connection adapter (2).

3. Wiper arm having a connection adapter according to Claim 2,
**characterized**
**in that** the fluid plug-type connector (6) is a component which is movable in relation to the wiper arm (3) and is connected to the latter via the fluid lines (8).

4. Wiper arm having a connection adapter according to one of the preceding claims,
**characterized**
**in that** the fluid plug-type connector (6) is insertable flush into the top side of the connection adapter (2).

5. Wiper arm having a connection adapter according to one of the preceding claims,
**characterized**
**in that** the connection adapter (2) has a receptacle for the fluid plug-type connector (6) via the opening (4) for the pin (5).

6. Wiper arm having a connection adapter according to Claim 5,
**characterized**
**in that** the fluid connections (10) in the connection adapter (2) are arranged laterally with respect to the opening (4) for the pin (5).

7. Wiper arm having a connection adapter according to one of the preceding claims,
**characterized**
**in that** the fluid connector (6) extends transversely over the entire width of the connection adapter (2).

## Revendications

1. Bras d'essuie-glace avec adaptateur de liaison, sur lequel peut être maintenu un balai d'essuie-glace (3), notamment un balai d'essuie-glace à barre plate ou un balai d'essuie-glace sans articulation, et qui présente une ouverture (4) pour recevoir latéralement une tige (5) du bras d'essuie-glace (3), l'adaptateur de liaison (2) pouvant tourner autour de la tige (5) lorsque la tige (5) est insérée, ainsi que des moyens de verrouillage pour bloquer la tige (5) dans l'ouverture (4), notamment une bride qui est agencée parallèlement à la tige (5) sur le bras d'essuie-glace (3) et qui recouvre l'adaptateur de liaison (2) par une extrémité coudée, l'adaptateur de liaison présentant des raccords de fluide (10) pour l'amenée d'un liquide de nettoyage,
**caractérisé en ce que**
au moins un raccord de fluide (6) peut être relié à l'adaptateur de liaison (2) par un connecteur de fluide (6) sur le côté supérieur de l'adaptateur de liaison (2).

2. Bras d'essuie-glace avec adaptateur de liaison selon la revendication 1,
**caractérisé en ce que**
le connecteur de fluide (6) conduit des conduites de fluide (8) à l'adaptateur de liaison (2) parallèlement à la tige (5) du bras d'essuie-glace (3).

3. Bras d'essuie-glace avec adaptateur de liaison selon la revendication 2,
**caractérisé en ce que**
le connecteur de fluide (6) est un composant mobile par rapport au bras d'essuie-glace (3), qui est relié à celui-ci par l'intermédiaire des conduites de fluide (8).

4. Bras d'essuie-glace avec adaptateur de liaison selon l'une quelconque des revendications précédentes, **caractérisé en ce que**
le connecteur de fluide (6) peut être inséré en affleurement dans le côté supérieur de l'adaptateur de liaison (2).

5. Bras d'essuie-glace avec adaptateur de liaison selon l'une quelconque des revendications précédentes, **caractérisé en ce que**
l'adaptateur de liaison (2) présente un logement pour le connecteur de fluide (6) au-dessus de l'ouverture (4) pour la tige (5).

6. Bras d'essuie-glace avec adaptateur de liaison selon la revendication 5,
**caractérisé en ce que**
les raccords de fluide (10) dans l'adaptateur de liaison (2) sont agencés latéralement par rapport à l'ouverture (4) pour la tige (5).

7. Bras d'essuie-glace avec adaptateur de liaison selon l'une quelconque des revendications précédentes, **caractérisé en ce que**
le connecteur de fluide (6) s'étend transversalement sur toute la largeur de l'adaptateur de liaison (2).
